# EUROPEAN PATENT APPLICATION

(11) **EP 1 097 622 A2**
(43) Date of publication of application: **09.05.2001**
(21) Application number: 00123411.1
(22) Date of filing: 02.11.2000
(51) Int. Cl.: A01B 63/10

(54) **Hydraulic circuit for lifting and floating a tool supported by a tractor**

(30) Priority: 03.11.1999 IT MI992290
(71) Applicant: ANTONIO CARRARO S.p.A., 35011 Campodarsego (Padova) (IT)
(72) Inventor: Martignon, Girolamo, 35010 Borgoricco (Padova) (IT)
(74) Representative: Modiano, Guido, Dr.-Ing.

(57) **Abstract**

A hydraulic circuit for lifting and floating a tool supported by a tractor for agricultural uses, comprising at least means (2, 3) adapted to pressurize the fluid contained in the hydraulic circuit, two actuators (8, 9) actuated by the pressurized fluid and adapted to lift/float the tool, and means (4) which are adapted to control the flow of the pressurized fluid into the hydraulic circuit, characterized in that it further comprises a pair of reservoirs (10, 11) for the pressurized fluid, means (6) which are adapted to produce a preset value of the pressure of the fluid inside the hydraulic circuit, and means (5) which are adapted to automatically restore to the preset value the pressure of the fluid inside the hydraulic circuit.

## Description

The invention relates to a hydraulic circuit which is adapted to lift and lower a tool supported by a tractor for agricultural uses and to "float" the tool with respect to the tractor so as to allow the tool to follow the contour of the ground while keeping constant the pressure applied by the tool to the ground.

Currently conventional tractors for agricultural uses are fitted with tools which, due to their operating requirements, must be partly or fully supported by the tractor.

Accordingly, the rear part of a tractor is normally provided with at least one power take-off in order to connect the moving elements of the tool to the motor of the tractor, coupling points to which the tool is to be fixed, and lifting means (usually but not necessarily of the hydraulic type) which allow to lift and lower the tool and to adjust its height with respect to the ground.

Some of the tools to be applied to a tractor, especially if designed to be used for haymaking on sloping ground, must follow the shape of the ground in order to work correctly.

For this purpose, hydraulic circuits which allow so-called "floating" of the tool, so as to allow it to adapt to the shape of the ground, have been provided and are widely used.

The purpose of floating circuits is to keep constant the pressure applied to the ground by the tool, transferring to the ground, through the tool, only a constant fraction of its weight, while the remaining weight is discharged to the ground through the tires of the tractor.

The coupling between the tractor and the tool (even if the tool is designed to work on the surface, such as for example a mower) often causes stability problems, which become very dangerous when the work is to be performed in mountainous areas or in any case on sloping terrain.

In order to overcome these problems, in conventional floating circuits the operator is usually forced to periodically check, and manually restore, the settings of the floating circuit in order to adapt them to the conditions of the ground and avoid the imbalance and possible tipping of the tractor/tool assembly.

Manual checking of the settings of the floating circuit is also necessary in order to keep under control the conditions of said circuit, for example in order to detect any pressure losses caused by leakage of oil (or of any other fluid used in the hydraulic circuit) and to promptly correct them.

In order to obviate the drawbacks and limitations of a conventional hydraulic lifting and floating circuit, the hydraulic circuit according to the present invention is provided with means which are adapted to automatically restore to a preset value the pressure of the oil inside the circuit (thus compensating, if necessary, any oil leakage) in order to adapt the pressure to the specific operating conditions of the tool, allowing the tool to follow the shape of the ground and keep constant the pressure applied to the ground.

A hydraulic lifting and floating circuit according to the invention does not require to perform the manual settings and adjustments required by conventional hydraulic lifting and floating circuits.

The aim of the present invention is to provide a hydraulic lifting and floating circuit for a tool supported by a tractor for agricultural uses, comprising at least one pump (or other equivalent means) for pressurizing the fluid contained in the hydraulic circuit, two actuators actuated by the pressurized fluid and adapted to lift/float the tool, and means which control the flow of the pressurized fluid into the hydraulic circuit.

The hydraulic circuit further comprises two reservoirs for the pressurized fluid, means adapted to determine a preset value of the pressure of the fluid inside the hydraulic circuit, and means adapted to automatically restore to said preset value the pressure of the fluid inside the hydraulic circuit.

Further characteristics and advantages of the hydraulic circuit according to the present invention will become better apparent from the following description thereof with reference to non-limitative examples of embodiments, illustrated in the accompanying drawings, wherein:
Figure 1 is a schematic view of a first embodiment of a hydraulic circuit according to the invention;
Figure 2 is a schematic view of the configuration assumed by the circuit of Figure 1 during lifting;
Figure 3 is a schematic view of the configuration assumed by the circuit of Figure 1 during stalling;
Figure 4 is a schematic view of the configuration assumed by the circuit of Figure 1 during floating in the normal position;
Figure 5 is a schematic view of the configuration assumed by the circuit of Figure 1 when, during floating, a hollow is encountered;
Figure 6 is a schematic view of the configuration assumed by the circuit of Figure 1 when, during floating, a prominence is encountered;
Figure 7 is a schematic view of a second embodiment of a hydraulic circuit according to the invention;
Figure 8 is a schematic view of a third embodiment of a hydraulic circuit according to the invention.

In the figures, corresponding elements are designated by the same reference numerals.

A hydraulic lifting and floating circuit according to the invention comprises at least means adapted to pressurize the oil (or other equivalent fluid) contained in the hydraulic circuit, two actuators actuated by the pressurized oil and adapted to lift/float the tool, and means adapted to control the flow of the pressurized fluid into the hydraulic circuit; said hydraulic circuit further comprises two reservoirs for the pressurized oil, means adapted to determine a preset value of the pressure of the oil inside the hydraulic circuit, and means adapted to automatically restore to said preset value the pressure of the oil inside the hydraulic circuit.

The pressurized oil is further sent to additional users (also known as "services" and generically designated by the reference sign "S" in the accompanying figures), which are not further described being per se known and in any case beyond the scope of the present invention.

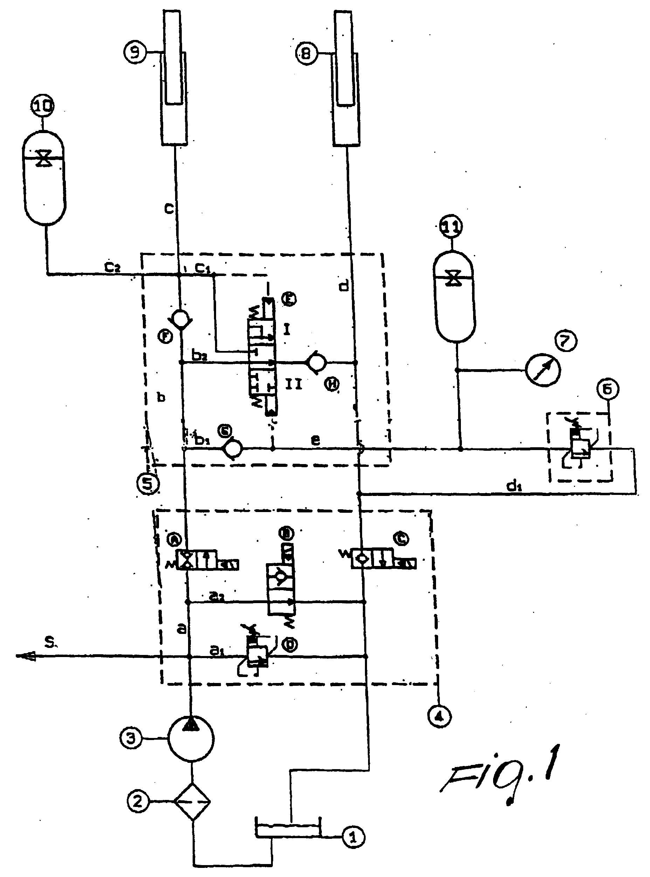

Figure 1 is a schematic view of a first embodiment of a hydraulic circuit according to the invention and shows means 2, 3 adapted to keep pressurized the oil contained in the hydraulic circuit, actuators 8, 9 constituted by hydraulic cylinders which are actuated by the pressurized oil, an assembly 4 (which in the example of embodiment described herein comprises electric valves A, B and C and a pressure limiting valve D) which constitutes the means adapted to control the flow of pressurized oil into the hydraulic circuit, a pressure limiting valve 6 (which is connected between lines d1 and e which are connected to an assembly 5) which constitutes the means adapted to determine a preset value of the pressure of the oil inside the hydraulic circuit. The circuit further comprises reservoirs 10, 11 of the pressurized oil and the assembly 5 (which in the example of embodiment described herein is constituted by check valves F, G and H and by a slide-valve distribution unit E controlled by the difference in pressure between a line c of the actuator 9 and the line e of the pressure limiting valve 6) which constitutes the means adapted to automatically restore to said preset value the pressure of the oil inside the hydraulic circuit.

Within the scope of the present invention, it is possible to replace the hydraulic cylinders 8, 9 that constitute the actuators with other functionally equivalent hydraulic means not further described being per se known and in any case not relevant to the present invention.

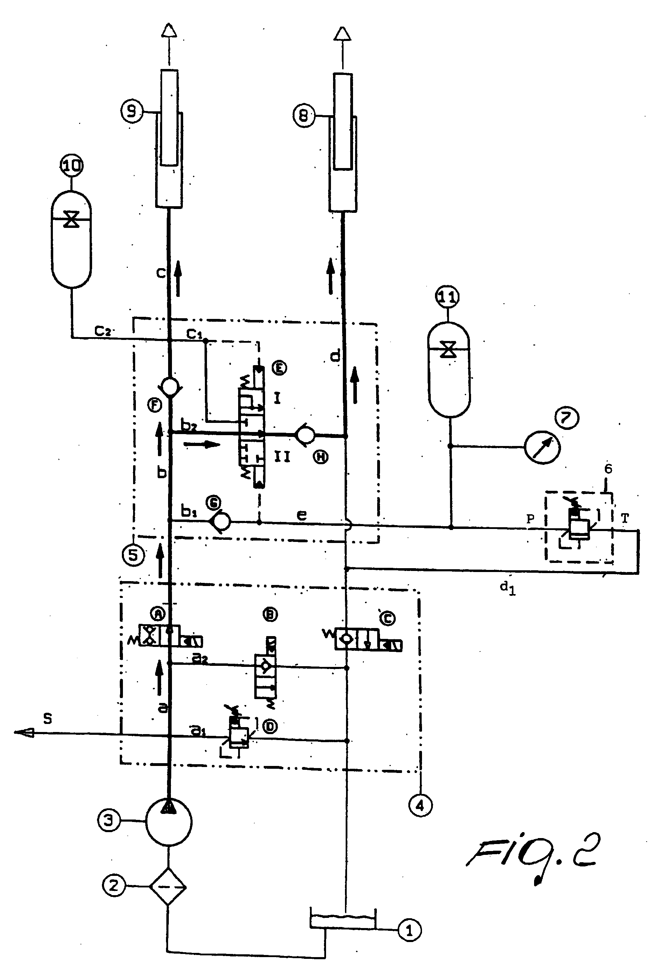

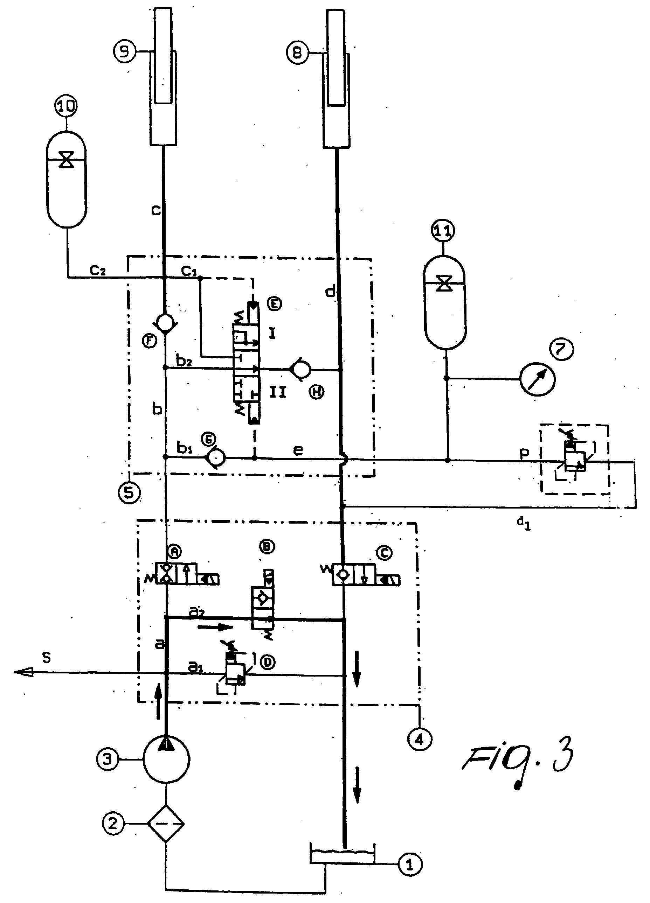

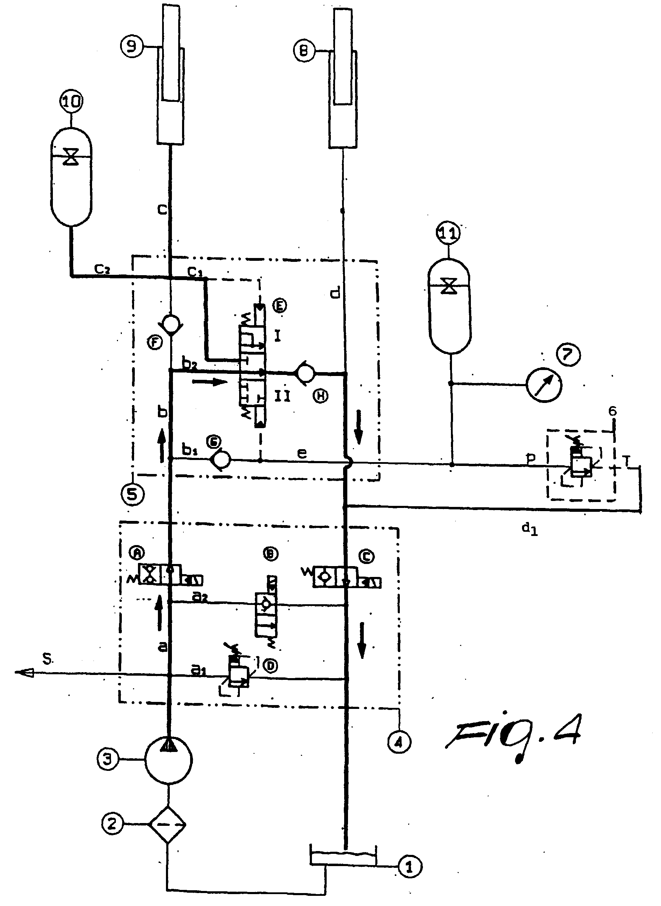

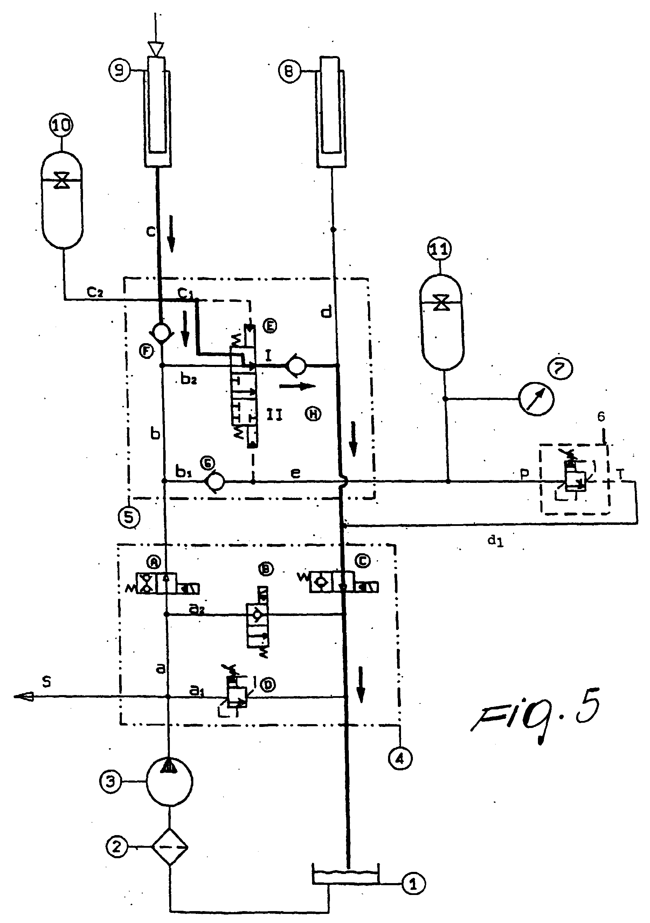

The operation of a modified hydraulic circuit according to the invention is now described with reference to Figures 2 to 6, wherein the configurations assumed by the hydraulic circuit in each step have been highlighted in thicker lines in order to provide a clearer description.

Figure 2 is a schematic view of the configuration assumed by the circuit of Figure 1 during the step for lifting the tool, which necessarily precedes the floating step.

When the slide-valve distribution unit E and the electric valves (A, B, C) are switched as shown in Figure 2, the pressurized oil flows along the lines a, b, c, and d, actuating the actuators 8 and 9 and pressurizing the reservoir 10 by means of the line c2 and the reservoir 11 by means of the line e; the lifting of the tool is interrupted when the electric valves A and B are deactivated to switch to the stalling step, or when the actuators have reached the end of their stroke and the pressure in the circuit exceeds the maximum allowable value, which is determined by the pressure limiting valve D.

The lifting step is not described further, since it corresponds to the lifting step of a conventional hydraulic lifting and floating circuit and is in any case well-known to the skilled in the field.

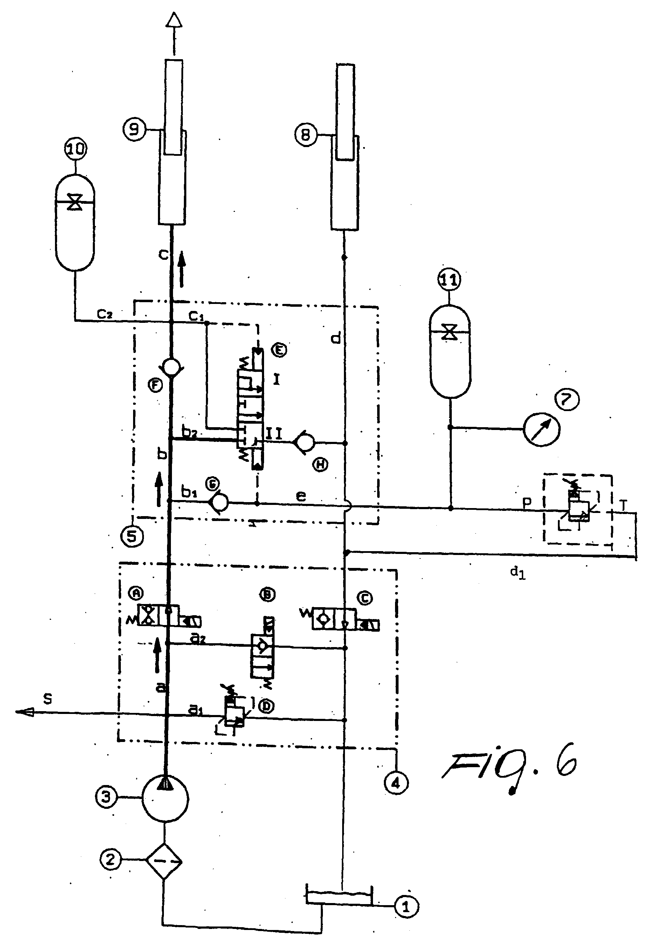

Figure 3 is a schematic view of the configuration assumed by the circuit of Figure 1 during the stalling step, in which the tool is kept in the position reached during the preceding lifting step.

When the slide-valve distribution unit E and the electric valves A, B, C are switched as shown in Figure 3, the actuators 8, 9 remain locked in the position reached earlier because they are isolated from the rest of the hydraulic circuit by the check valve H and by the electric valve C and, respectively, by the check valve F and by the distribution unit E.

The check valve H (connected between the distribution unit E and the line d of the actuator 8) may be omitted, but it is necessary if one wishes to prevent the actuators 8, 9 from oscillating when loaded due to the presence of the reservoirs 10 and 11 (rigid stalling condition).

The stalling step is not described further since it corresponds to the stalling step of a conventional hydraulic lifting and floating circuit and is in any case well-known to the skilled in the field.

Figure 4 is a schematic view of the configuration assumed by the circuit of Figure 1 during the floating step in the normal position: part of the weight of the tool is supported by the tractor, while the remaining part is transferred to the ground by the tool.

When the slide-valve distribution element E and the electric valves A, B, C are switched as shown in Figure 4, the actuator 9, isolated from the rest of the hydraulic circuit by the check valve F and by the distribution unit E, is connected exclusively to the reservoir 10: the pressure in the actuator 9 accordingly maintains the value acquired during the lifting and/or stalling step, accordingly keeping the tool (supported by the actuator 9) in the position reached during said step.

It is noted that in conventional lifting systems the points where the tool couples to the actuators 8 and 9 are mechanically connected by coupling means (which are neither described nor shown in the figures, since they are per se known) which allow the weight of the tool to bear onto a single actuator (the actuator 9 in the embodiment described herein) while maintaining the tool in the working position (usually with the lower part arranged horizontally).

During the floating step, the tool is fully supported by the actuator 9, while the actuator 8 is connected to the discharge 1 by means of the line d and the electric valve C.

The pressure of the line e is fixed to a preset value by means of the pressure limiting valve 6, which determines the operating pressure of the suspension; the pressure in the line e of the valve 6, together with the reservoir 11 and the check valve G, in fact balances the pressure in the line c, keeping the slide-valve distribution unit E in the central position assumed during the stalling step.

The pressure in the line e determines the percentage of the weight of the tool that is supported by the tractor.

The presence of the two reservoirs 10, 11 allows to stabilize the pressure in the two branches to which they are connected; in particular, the reservoir 10 acts as an oil reserve, compensating for any leakage of oil and sudden pressure decrease in the lines c and c2 connected to the actuator 9, while the reservoir 11 absorbs any fluctuations of the pressure in the line e connected thereto, allowing correct operation of a modified hydraulic circuit according to the invention during the floating step.

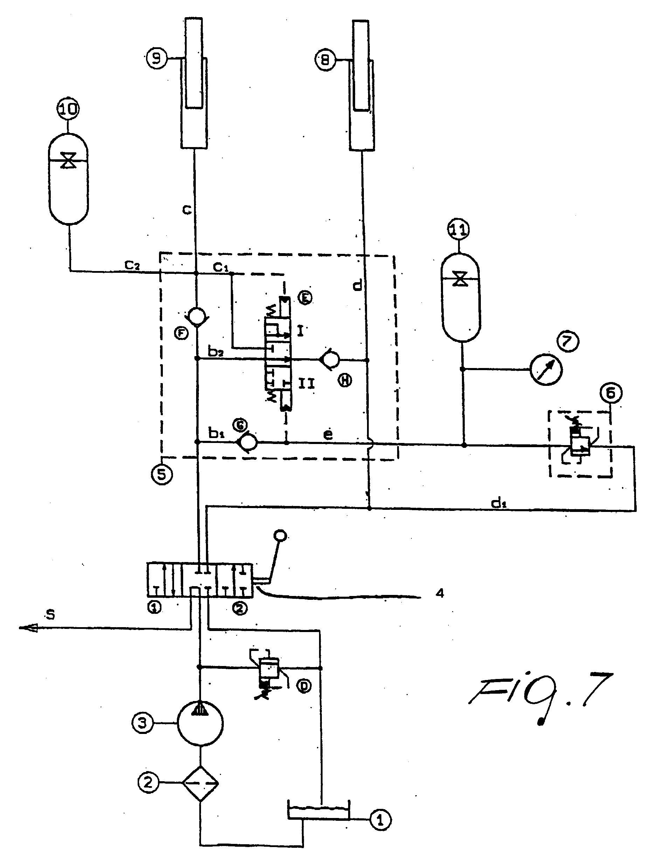

Figure 5 is a schematic view of the configuration assumed by the circuit of Figure 1 when, during the floating step, a hollow (prominence) is encountered and therefore the tool bears more intensely on the lifting system (particularly on the actuator 9), increasing the pressure in the line c with respect to the line e (which is kept at a preset value by the pressure limiting valve 6) and therefore generating an imbalance of the distribution unit E which belongs to the restoring means 5: in response to such imbalance, the distribution unit E (as shown in Figure 5) switches to the position I, connecting the actuator 9 to the discharge 1 by means of the lines c and c1, in order to eliminate the overpressure.

The distribution unit E remains switched to the position I throughout the imbalance and then returns to the normal position of Figure 4.

Preferably but not necessarily, in order to prevent the restoring means 5 from intervening unnecessarily for every slightest unevenness in the ground, the distribution E has a certain "lag" which makes it switch only when the imbalance between the lines c and e exceeds a preset minimum value.

Said "lagged" distribution unit E is not further described being well-known to the skilled in the field.

Figure 6 is a schematic view of the configuration assumed by the circuit of Figure 1 when, during the floating step, a prominence (hollow) is encountered and accordingly the tool tends to rise, suddenly reducing the pressure on the lifting system and particularly on the actuator 9.

The consequent pressure drop in the line c with respect to the line e (kept at a preset value by the pressure limiting valve 6) causes an imbalance of the distribution unit E that belongs to the restoring means 5: in response to this imbalance, the distribution unit E (as shown in Figure 6) switches to the position II, closing the line b2 in order to isolate the branches on which the two actuators (8, 9) are inserted and pressurizing the line c, whose pressure rises until it balances the pressure of the line e.

The distribution unit E remains switched to the position II throughout the duration of the imbalance and then returns to the normal position of Figure 4.

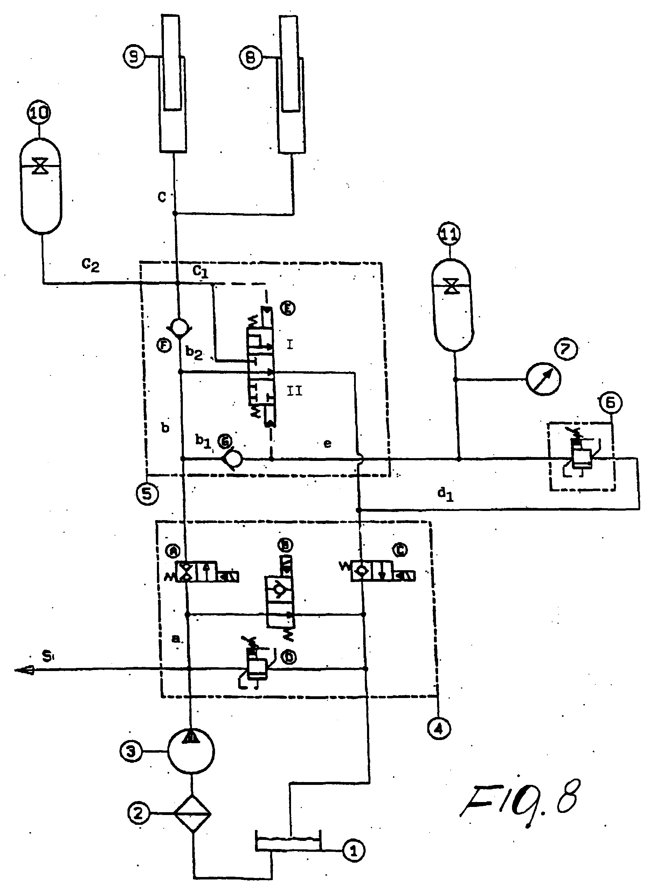

Figure 7 is a schematic view of a second embodiment of a modified hydraulic circuit according to the invention, which differs from the one shown in Figure 1 substantially in that in the control unit 4 the electric valves A, B, C have been replaced with a manually-operated slide-valve distribution unit.

The operation of the hydraulic circuit of Figure 7 does not differ substantially from the one described earlier with reference to Figures 2 to 6.

Figure 8 is a schematic view of a third embodiment of a modified hydraulic circuit according to the invention, which differs from the one shown in Figure 1 substantially in that the actuator 8 is connected (in parallel to the actuator 9) to the line c that exits from the means 5 instead of being connected to the line d, which accordingly can be omitted.

The operation of the hydraulic circuit of Figure 8 differs from the one described earlier with reference to Figures 2 to 6 substantially in that floating is provided by means of both of the actuators 8, 9 instead of by means of the actuator 9 alone.

In the embodiment of Figure 8 also, the pressure limiting valve 6 sets to a preset value the pressure of the line e used by the distribution unit E in order to detect and eliminate the imbalance produced by a hollow or prominence; moreover:
-- during the floating step, the actuators 8, 9 connected to a reservoir 10 are isolated from the rest of the hydraulic circuit by the first check valve F and by the distribution unit E, which belong to the means 5;
-- when a hollow (prominence) is encountered, the tool bears more intensely onto the actuators 8, 9, causing an imbalance of the distribution unit E: in response to said imbalance, the distribution unit E switches (connecting to the discharge 1 the actuators 8 and 9 in order to eliminate the overpressure) and remains switched throughout the imbalance;
-- when a prominence (hollow) is encountered, the tool tends to rise, suddenly reducing the pressure on the actuators 8, 9 and causing an imbalance of the distribution unit E: in response to said imbalance, the distribution unit E switches, pressurizing the line c connected to the actuators 8, 9, whose pressure rises until the imbalance of the distribution unit E is eliminated, and said distribution unit remains switched throughout the imbalance.

Within the scope of the present invention, it is possible to introduce in the hydraulic lifting and floating circuit according to the present invention all the modifications and improvements suggested by ordinary experience and by technological development.

The disclosures in Italian Patent Application No. MI99A002290 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A hydraulic circuit for lifting and floating a tool supported by a tractor for agricultural uses, comprising at least means (2, 3) adapted to pressurize the fluid contained in the hydraulic circuit, two actuators (8, 9) actuated by the pressurized fluid and adapted to lift/float the tool, and means (4) adapted to control the flow of the pressurized fluid into the hydraulic circuit, characterized in that it further comprises a pair of reservoirs (10, 11) for the pressurized fluid, means (6) which are adapted to produce a preset value of the pressure of the fluid inside the hydraulic circuit, and means (5) which are adapted to automatically restore to said preset value the pressure of the fluid inside the hydraulic circuit.

2. The hydraulic circuit according to claim 1, characterized in that the actuators (8, 9) are constituted by hydraulic cylinders.

3. The hydraulic circuit according to claim 1, characterized in that the means (6) adapted to set to a preset value the pressure of the oil inside the hydraulic circuit are constituted by a pressure limiting valve connected between two (d1, e) of the lines that are connected to the means (5) adapted to automatically restore to said preset value the pressure of the fluid inside the hydraulic circuit.

4. The hydraulic circuit according to claim 1, characterized in that the means (5) adapted to automatically restore to the preset value the pressure of the fluid inside the hydraulic circuit comprise at least first and second check valves (F, G) and a distribution unit (E) which is controlled by the difference in pressure between the line (c) connected to at least one of the actuators and the line (e) connected to the means (6) adapted to set a preset value of the pressure of the fluid inside the hydraulic circuit.

5. The hydraulic circuit according to claim 4, characterized in that the distribution unit (E) has a lag which makes it switch only when the difference in pressure between said lines (c, e) exceeds a preset value.

6. The hydraulic circuit according to claim 4, characterized in that the means (5) adapted to automatically restore to the preset value the pressure of the fluid inside the hydraulic circuit further comprise a third check valve (H) which is connected between the distribution unit (E) and the line (d) of a second actuator (8).

7. The hydraulic circuit according to at least one of the preceding claims, characterized in that during the floating step:
-- the first actuator (9), which is connected to a first reservoir (10), is isolated from the rest of the hydraulic circuit by the first check valve (F) and by the distributor (E), which belong to the means (5) adapted to automatically restore to the preset value the pressure of the fluid inside the hydraulic circuit;
-- the pressure of the line (e) is set to a preset value by virtue of the means (6) which are adapted to set to a preset value the pressure of the fluid inside the hydraulic circuit;
said pressure determining the percentage of the weight of the tool that is supported by the tractor.

8. The hydraulic circuit according to claim 8, characterized in that the first reservoir (10) acts as reserve for the fluid, compensating for any losses of fluid and sudden decreases in pressure in the lines (c, c2) connected to the first actuator (9), while the second reservoir (11) absorbs the fluctuations of the pressure in the line (e) connected thereto.

9. The hydraulic circuit according to claim 7, characterized in that when the tool bears more intensely onto the first actuator (9):
-- it causes an imbalance of the distribution unit (E) that belongs to the means (5) that are adapted to automatically restore to the preset value the pressure of the fluid inside the hydraulic circuit;
-- in response to said imbalance, the distribution unit (E) switches, connecting the first actuator (9) to the discharge (1) to eliminate overpressure;
-- the distribution unit (E) remains switched throughout the duration of the imbalance.

10. The hydraulic circuit according to claim 7, characterized in that when the tool suddenly reduces the pressure onto the first actuator (9):
-- it causes an imbalance of the distribution unit (E) that belongs to the means (5) that are adapted to automatically restore to the preset value the pressure of the fluid inside the hydraulic circuit;
-- in response to said imbalance, the distribution unit (E) switches, isolating the branches in which the two actuators (8, 9) are inserted and pressurizing the line (c) connected to the first actuator (9), whose pressure rises until the imbalance of the distribution unit (E) is eliminated;
-- the distribution unit (E) remains switched throughout the duration of the imbalance.

11. The hydraulic circuit according to claim 1, characterized in that the actuators (8, 9) are connected in parallel to each other to the same line (c) that exits from the means (5) adapted to automatically restore to a preset value the pressure of the fluid in the hydraulic circuit.

12. The hydraulic circuit according to claims 7 and 11, characterized in that during the floating step the actuators (8, 9) connected to a reservoir (10) are isolated from the rest of the hydraulic circuit by the first check valve (F) and by the distribution unit (E), which belong to the means (5) adapted to automatically restore to the preset value the pressure of the fluid in the hydraulic circuit.

13. The hydraulic circuit according to claim 12, characterized in that when the tool bears more intensely onto the actuators (8, 9):
-- it causes an imbalance of the distribution unit (E) that belongs to the means (5) adapted to automatically restore to the preset value the pressure of the fluid in the hydraulic circuit;
-- in response to said imbalance, the distribution unit (E) switches, connecting to the discharge (1) the actuators (8, 9) in order to eliminate the overpressure;
-- the distribution unit (E) remains switched throughout the duration of the imbalance.

14. The hydraulic circuit according to claim 12, characterized in that when the tool suddenly reduces the pressure on the actuators (8, 9):
-- it causes an imbalance of the distribution unit (E) that belongs to the means (5) that are adapted to automatically restore to the preset value the pressure of the fluid inside the hydraulic circuit;
-- in response to said imbalance, the distribution unit (E) switches, pressurizing the line (c) that is connected to the actuators (8, 9), whose pressure rises until the imbalance of the distribution unit (E) is eliminated;
-- the distribution unit (E) remains switched throughout the duration of the imbalance.
